# EUROPEAN PATENT SPECIFICATION

(11) **EP 3 613 564 B1**
(45) Date of publication and mention of the grant of the patent: **16.06.2021**
(21) Application number: 18190312.1
(22) Date of filing: 22.08.2018
(51) Int. Cl.: B29C 64/393, B29C 64/153, B22F 3/105, B33Y 30/00

(54) **DETERMINATION DEVICE FOR DETERMINING A SCAN VELOCITY OF AN ENERGY BEAM**
BESTIMMUNGSVORRICHTUNG ZUR BESTIMMUNG DER ABTASTGESCHWINDIGKEIT EINES ENERGIESTRAHLS
DISPOSITIF DE DÉTERMINATION POUR DÉTERMINER UNE VITESSE DE BALAYAGE D'UN FAISCEAU D'ÉNERGIE

(43) Date of publication of application: 26.02.2020
(73) Proprietor: Concept Laser GmbH, 96215 Lichtenfels (DE)
(72) Inventor: Burggraf, Udo, 36119 Neuhof (DE)
(74) Representative: Hafner & Kohl PartmbB

(56) References cited:
- EP-A1- 3 002 567
- US-A1- 2016 211 116
- US-A1- 2017 157 704

## Description

The invention relates to a determination device for determining a scan velocity of an energy beam for an apparatus for additively manufacturing three-dimensional objects by means of successive layerwise selective irradiation and consolidation of layers of a build material which can be consolidated by means of an energy beam, wherein the determination device comprises a determination unit that is arrangeable or arranged in a process chamber of an apparatus for additively manufacturing three-dimensional objects.

Determination devices for apparatuses for additively manufacturing three-dimensional objects, in particular for determining a scan velocity of an energy beam which is used in an additive manufacturing process performed on the additive manufacturing apparatus, are generally known from prior art. In such apparatuses an energy beam is selectively guided onto a layer of build material to irradiate and thereby consolidate the build material. For calibrating the scan velocity with which the energy beam is guided over the build material, usually a test irradiation process is performed, in which a test irradiation pattern is generated, wherein the scan velocity of the energy beam is determined.

For example, it is known to arrange two detection elements or two detection units on a build plane that are spaced a defined distance apart from each other. Subsequently, the energy beam is guided along a straight scan path over both detection elements or detection units, respectively, wherein each detection element or detection unit generates a signal upon irradiation. By determining the time that passes between the two signals, the scan speed or the scan velocity of the energy beam being scanned along the straight scan path can be determined.

The approach described before requires the energy beam to be guided on a straight path of known length. Further, the scan velocity is subject to mechanical effects, such as delays, for example caused by the inertia of the beam guiding element, such as the inertia of a beam guiding mirror, when accelerating at the start and decelerating at the end of a motion of the beam guiding element. Besides, it is necessary to position the detection elements or detection units, respectively, precisely inside the process chamber, in particular on the build plane, to ensure that the defined length of the straight scan path is properly met and the energy beam is properly guided over the detection elements or detection units.

US 2017/157704 A1 discloses a method for determining a scanning speed of a high-energy beam of a manufacturing device (10) for the additive production of a component of a turbomachine.

EP 3 002 567 A1 discloses a measuring method for measuring laser scanning velocity for a laser beam machining apparatus.

US 2016/211116 A1 discloses a method for calibrating an electron beam.

It is an object of the present invention to provide an improved determination device for determining a scan velocity, wherein in particular scan velocities for scan paths deviant from a straight scan path can be determined and wherein the determination device is more stable against inaccurate positioning.

The object is inventively achieved by a determination device according to claim 1. Advantageous embodiments of the invention are subject to the dependent claims.

The determination device described herein is a determination device for determining a scan velocity for an apparatus for additively manufacturing three-dimensional objects, e.g. technical components, by means of successive selective layerwise consolidation of layers of a powdered build material ("build material") which can be consolidated by means of an energy beam, in particular a laser beam or an electron beam. A respective build material can be a metal, ceramic or polymer powder. A respective energy beam can be a laser beam or an electron beam. A respective apparatus can be an apparatus in which an application of build material and a consolidation of build material is performed separately, such as a selective laser sintering apparatus, a selective laser melting apparatus or a selective electron beam melting apparatus, for instance.

The apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described before, the invention relates to a determination device for determining a scan velocity of an energy beam for additive manufacturing apparatuses. In such apparatuses, the energy beam is used to irradiate build material corresponding to the cross-section of the object that has to be irradiated in the actual layer of build material. Thus, it is possible to successively and layerwise consolidate the cross-sections of the object to additively build the three-dimensional object.

The determination of the scan velocity is crucial for object quality and process quality, as the scan velocity defines the time the energy beam is incident on a certain area of build material / a certain position in the build plane, i.e. the plane in which the build material is arranged to be irradiated. In other words the scan velocity defines how much energy is deposited in the build material via the energy beam, wherein faster scan velocities lead to a comparatively lower energy deposition as slower scan velocities, since the energy beam has more time to deposit energy in the build material when the energy beam is moved slower over the build material arranged in the build plane. Hence, the deviations from a nominal scan velocity lead to errors regarding the proper amount of energy that is deposited in the build material and therefore, directly influence the process quality and the object quality.

The invention is based on the idea that the determination device is adapted to determine a scan velocity with which the energy beam is guided along a closed path based on the scan time required for guiding the energy beam along the closed scan path. For example, the energy beam is guided inside a process chamber, i.e. a chamber in which the additive manufacturing process is performed, wherein the determination device may comprise a determination unit that can be arranged or is arranged inside the process chamber of the apparatus, wherein the energy beam can be guided onto/over the determination unit in that the determination unit may generate a signal corresponding to the energy beam being incident on the determination unit.

The determination device is adapted to determine the scan time required for guiding the energy beam along the closed scan path, wherein the scan time and the length of the closed scan path allow for determining the scan velocity with which the energy beam is guided along the closed scan path. In other words, it is not necessary to guide the energy beam along a straight scan path with defined length that has to be properly arranged inside the process chamber or the determination unit has to be properly arranged relative to the straight scan path, but it is possible to guide the energy beam along a closed scan path of arbitrary shape, wherein the scan time required for guiding the energy beam along the closed scan path of defined length allows for determining the scan velocity.

Preferably, the determination device comprises a determination element which is arranged on the determination unit and is adapted to receive the energy beam that is guided inside the process chamber. The determination element may comprise or may be built as a suitable sensor for receiving the energy beam, such as a photo diode, wherein the determination element may generate a signal, in particular an electric signal, upon irradiation with the energy beam. Hence, it is possible to have the determination element generate a corresponding signal when the energy beam is incident on the determination element. Thus, the determination element is positioned inside the process chamber of the apparatus in that the energy beam passes (is incident on) the determination element in any arbitrary point of the closed scan path. In other words, when the energy beam is guided along the closed scan path the energy beam passes the determination element in an arbitrary point along the closed scan path and generates a corresponding (electrical) signal.

According to a preferred embodiment of the inventive determination device, the determination device is adapted to determine the scan velocity based on a number of turns the energy beam is guided along the closed scan path and the corresponding scan time. According to this embodiment, it is possible to guide the energy beam along the closed scan path for a defined (arbitrary) number of turns, for example 5, 10, 100 or any other arbitrary number of turns. As the determination device is adapted to generate a signal upon receiving of the energy beam, it is possible to determine the number of turns.

Preferably the determination device is adapted to determine the scan time for each turn based on the generation of the signal. Thus, it is also possible to determine the scan time that is required for performing the irradiation pattern, i.e. for scanning the energy beam along the closed scan path either for the defined number of turns and also for each of the turns, as upon completion of each turn a signal can be generated with the energy beam passing the determination element. In other words, the energy beam can be guided along the closed scan path for a number of turns, wherein a signal is generated each time the energy beam passes the determination element.

Hence, the scan time for completing a turn (of the closed scan path) can be determined by comparing the time that passes between two signals, for instance. Due to the arbitrary number of turns it is possible to reduce the impact of mechanical effects, such as delays, in particular inertia effects, as the energy beam does not have to be accelerated and/or decelerated, but it is possible to constantly move the energy beam along the closed scan path. Further, it is possible to compare and determine each scan time for each turn, wherein an error calculation, in particular a (standard) deviation and other statistical methods can be applied.

The inventive determination device may further be improved in that the determination element is built as or comprises at least one sensor that is adapted to generate an electrical signal upon irradiation with the energy beam, in particular an optical sensor, preferably a photo diode. Hence, the sensor is arranged on the track of the energy beam, e.g. on the closed scan path, wherein an electrical signal can be generated every time the energy beam is guided over the determination element. For example, the determination element may be built as or may comprise a photo diode that generates the electrical signal upon the irradiation with the energy beam. Thus, it is possible to count the number of turns the energy beam is guided along the closed scan path and it is also possible to take the time between each two signals generated due to the irradiation with the energy beam. Therefore, it is possible to determine the scan time for each turn and, for example, determine the average scan time required for guiding the energy beam along the closed scan path. Together with the length of the closed scan path it is possible to determine the scan velocity accurately. Of course, the determination element is chosen dependent on the type of energy beam used in the process. For example, if an electron beam is used, an adequate determination element has to be chosen, such as an element of different material (e.g. copper) than the material arranged in the build plane (differing from the material of the rest of the determination unit), wherein a corresponding detector can be used to detect radiation emitted from the element. Hence, an x-ray detector can be used to detect the radiation emitted due to the irradiation of the determination unit, wherein it is possible to detect the radiation of the determination element, as the radiation emitted from the determination element differs from radiation emitted from the rest of the determination unit.

According to another embodiment of the inventive determination device, the determination element may comprise a determination area that is larger than the track size generated via the energy beam that is guided along the closed scan path. With the determination area that is provided via the determination element being larger than the track size, i.e. larger than the track (on the build plate) that is generated via the energy beam, it is achieved that the requirements posed with respect to the positioning accuracy of the determination unit in the process chamber can be lowered, as it is only necessary that the energy beam is guided over the determination area but it is not important in which part of the determination area the energy beam is guided over the determination element. Hence, as long it is assured that the energy beam is guided over the determination area when being scanned along the closed scan path, the signal can be generated and therefore, the turns along the closed scan path can be determined as well as the required scan time.

The determination area may comprise a defined size, in particular larger than the track size of the closed scan path, e.g. the spot size of the energy beam, preferably at least one order of magnitude greater than the track size. For example, the determination area may be more than 1 cm wide, whereas the spot size of the energy beam or the track size of the closed scan path may be 0.1 mm, for instance. The determination device may comprise multiple determination units, e.g. photo diodes, that can be arranged in a predefined pattern. The determination units may, for example, be arranged radially with respect to a center of the closed scan path or a center of the build plane, respectively. It is also possible that the determination units are arranged in a predefined pattern in that the closed scan path lies over at least one of the multiple determination units, for example the energy beam being guided along the closed scan path passes one or more of the determination units. It is not important in which or how many of the determination units are irradiated via the energy beam, as only one determination unit is sufficient to generate the signal that is used to determine the scan velocity, as described before.

The determination area may comprise a defined orientation, wherein the determination area may preferably extend radially with respect to the center of the determination unit. In particular, if the closed scan path describes a circle in the build plane, it is beneficial that the determination area extends radially with respect to the center of the determination unit, e.g. the center of the circle. Hence, the deviations regarding the positioning of the determination unit and/or the scan path relative to the determination unit can increase without the closed scan path leaving the determination area.

Hence, it is possible that the determination device is (more) insensitive to incorrect positioning of the determination element due to the defined size and/or the defined orientation of the determination area. As described before, it is only necessary that the closed scan path lies on the determination element, in particular in the determination area. As the determination area is chosen to be larger than the track size, the closed scan path can be arbitrarily positioned relative to the determination unit as long it is assured that at least one part of the closed scan path lies in the determination area.

According to another embodiment of the inventive determination device, the closed scan path may comprise at least one path segment with a defined shape, in particular a circular shape and/or triangular shape and/or an elliptical shape and/or a rectangular shape. Basically, the actual shape of the closed scan path can be chosen arbitrarily, as long as is assured that the scan path describes a closed contour, i.e. it is possible to endlessly guide the energy beam along the scan path, wherein one section or one point of the closed scan path can be arranged on the determination element. The simplest shape may be regarded as a circle, wherein dependent on the diameter or the radius of the circle it is possible to calculate the length of the closed scan path.

For example, different path segments, e.g. of a rectangle or a triangle, may be arranged with a defined orientation, e.g. in parallel to an x-direction or a y-direction. Hence, two parallel sides of a rectangle may be arranged in parallel to the x-direction and the other two parallel sides of the rectangle may be arranged in parallel to the y-direction. It is further possible to guide the energy beam multiple turns along such a closed scan path comprising the path segments, wherein different parameters of the individual path segments may be varied, e.g. the length of the path segments arranged in x-direction and/or the length of the path segments arranged in y-direction. Thus, it is possible to determine the contribution of different beam guiding elements to the overall scan velocity, for example the scan velocity of a first mirror assigned to guiding the energy beam in x-direction and the scan velocity of a second mirror assigned to guiding the energy beam in y-direction.

Dependent on the results of the determination it is possible to calibrate the individual beam guiding elements, for example the moving speed of beam guiding mirrors. Of course, the described determination and calibration can be transferred to electron beam apparatuses as well, wherein a corresponding parameter of the beam guiding elements, such as coils can be varied for calibration, e.g. a voltage applied on the coils used to deflect the electron beam.

Further, the determination device may be adapted to determine the scan velocity of the energy beam being guided along at least two different closed scan paths, in particular differing in diameter. It is also possible to arrange the at least two different scan paths in different positions, e.g. with respect to a center of the closed scan paths. For example it is possible to arrange the determination element in that it is possible to vary the closed scan path, for example in position, shape and diameter. It is also possible to have more than one energy beam and guide the at least two energy beams along different closed scan paths, wherein the scan velocities can be determined for the different energy beams. Hence, it is also possible to guide the energy beam for multiple turns along a closed scan path, wherein the closed scan path can be varied between the individual turns, for example changing the diameter of the scan path. Thus, it is possible to increase the reliability of the measurement.

The determination unit may be built as plate-like module that can be arranged or is arranged in the process chamber, wherein the determination device may comprise a holding means, in particular an opening or a recess in the surface of the plate-like module, in which the determination element is arranged. Thus, the determination unit may be built as plate-like module that can, for example, be positioned on the build plate of the additive manufacturing apparatus. The plate-like module may provide at least one opening or a recess in the module surface for receiving the determination element.

The inventive determination device may further be improved in that the determination unit may comprise positioning means, wherein the determination unit may be adapted to be connected with a corresponding positioning means arranged inside a process chamber of an additive manufacturing apparatus. Hence, the determination device may provide an interface that can be connected with a corresponding positioning means inside a process chamber of an apparatus. Thus, it is assured that the determination unit can accurately be positioned inside the process chamber.

As it is only necessary to guide the energy beam which is scanned along the closed scan path over the determination element in any arbitrary point of the closed scan path, it is possible to "search" the determination element in that the energy beam may be guided along the closed scan path, wherein the closed scan path as such can be generated in different positions on the build plane, i.e. on the determination unit. When a signal is generated and received, it is assured that at least one point of the closed scan path lies on the determination element, in particular in the determination area. Subsequently, it is possible to determine the scan velocity, as described before. In other words, it is possible to move the closed scan path relative to the determination unit until a signal is received.

Thus, it is not necessary to interact with the inside of the process chamber to accurately position the determination unit, e.g. to adjust a position of the determination unit, but it is sufficient to install the determination unit inside the process chamber and to guide the energy beam being guided along the closed scan path to different positions or generate the closed scan path in different positions to "search" the determination element, e.g. change the position in which the closed scan path is generated until the position of the determination element lies on the closed scan path. For example, the center of the closed scan path may be scanned over the build plate on which the determination unit is positioned, until a signal is generated by the determination element.

Besides, the invention relates to an apparatus for additively manufacturing three-dimensional objects by means of successive layerwise selective irradiation and consolidation of layers of a build material which can be consolidated by means of an energy beam, wherein the apparatus comprises an inventive determination device, as described before.

Further, the invention relates to a method for determining a scan velocity of an energy beam in an apparatus for additively manufacturing three-dimensional objects by means of successive layerwise selective irradiation and consolidation of layers of a build material which can be consolidated by means of the energy beam, wherein the energy beam is guided in a closed scan path over the determination device, wherein the scan velocity with which the energy beam is guided along the closed scan path inside the process chamber is determined based on the scan time required for guiding the energy beam along the closed scan path.

The method may further be improved in that a relative movement between the determination device and the closed scan path is generated until the energy beam that is guided along the closed scan path is incident on the determination unit. Hence, it is possible that the closed scan path can be moved to the determination unit of the determination device, for example if the closed scan path is initially not arranged over the determination unit. For example, if the determination device is inserted into the process chamber of the additive manufacturing apparatus, the closed scan path may not be arranged over the determination unit. The energy beam may then be guided along the closed scan path and a relative movement, e.g. a scanning movement, between the closed scan path and the determination unit can be generated until the energy beam being guided along the closed scan path is incident on the determination unit. Therefore, it can be assured that the closed scan path properly lies on the determination unit, e.g. the energy beam being guided along the closed scan path passes the determination unit. In other words, it is possible to "search" the closed scan path via the movement of the determination unit or vice versa. Of course, the inventive apparatus is adapted to generate the relative movement.

Self-evidently, all details, features and advantages that are described with respect to the inventive determination device are fully transferable to the inventive apparatus and the inventive method.

Exemplary embodiments of the invention are described with reference to the Fig. The Fig. are schematic diagrams, wherein
- Fig. 1: shows an inventive apparatus; and
- Fig. 2: shows an inventive determination device.

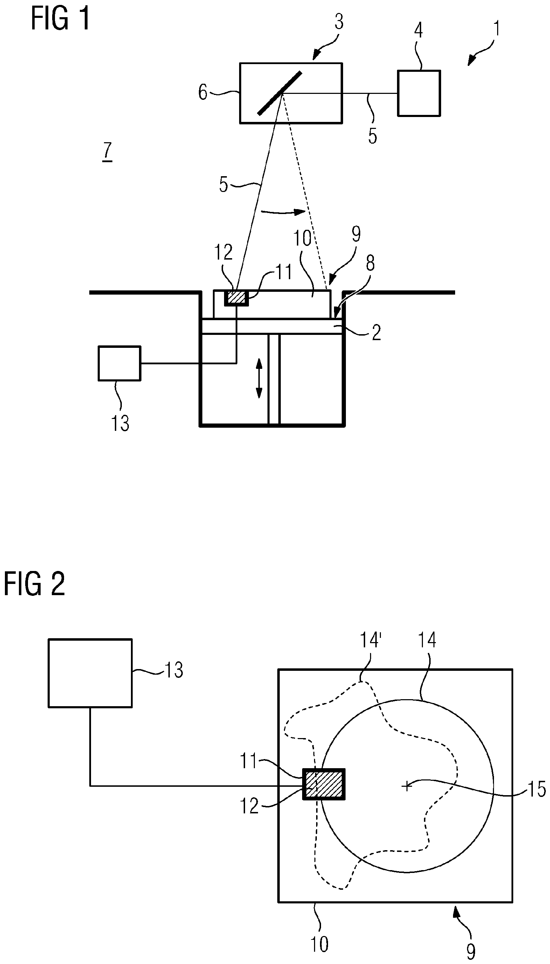

Fig. 1 shows an inventive apparatus 1, in particular an apparatus for additively manufacturing three-dimensional objects. In this exemplary embodiment the apparatus comprises a build plate 2 on which build material can be applied to be irradiated, wherein the build plate 2 can be adjusted in height (optional). Of course, it is also possible to generate a build plane in which build material is selectively irradiated in any other arbitrary manner. The apparatus 1 further comprises an irradiation device 3 comprising an energy source 4 that is adapted to generate an energy beam 5, for example a laser beam or an electron beam, and a beam guiding unit 6 that is adapted to guide the energy beam 5 in the process chamber 7, e.g. on the build plate 2, in particular on the build plane 8 that is provided via the build plate 2. Of course, in a regular mode of operation build material is applied onto the build plate 2 forming a build plane 8 in which a build material layer is applied to be (selectively) irradiated.

For determining a scan velocity of the energy beam 5 a determination device 9 is provided, wherein a determination unit 10 is arranged inside the process chamber 7, in particular positioned/mounted on the build plate 2. The determination unit 10 comprises an opening 11 in which an optical sensor 12 is received. The optical sensor 12 is, for example, built as photo diode that is adapted to generate an electrical signal upon irradiation with the energy beam 5. The electrical signal can be received via a control unit 13 of the determination device 9.

Fig. 2 shows a top view onto the determination device 9. As can be derived from Fig. 2, the energy beam 5 is guided along a closed scan path 14, 14'. For example, the closed scan path 14 is depicted as circle along which the energy beam 5 can be guided over the determination unit 10 of the determination device 9. The closed scan path can comprise an arbitrary shape, as depicted via the closed scan path 14' as dashed line.

The closed scan path 14, 14' therefore, describes a closed contour, wherein the (spot of the) energy beam 5 being guided along the closed scan path 14, 14' passes the determination element 12 of the determination unit 10. Thus, it is possible to guide the energy beam 5 an arbitrary number of turn, preferably multiple turns, along the closed scan path 14, 14', wherein after the completion of each turn an electrical signal is generated via the determination element 12 which can be received by the control unit 13. Hence, it is possible to count the number of turns the energy beam 5 is guided along the closed scan path 14, 14' and it is also possible to determine the time, in particular the scan time, required to complete a corresponding turn along the closed scan path 14, 14'. As the length of the closed scan path 14, 14' is defined, it is possible to determine the scan velocity of the energy beam 5.

Further, it can be derived from Fig. 2, that the determination area that is provided by the determination element 12 is far larger than the track size of the energy beam 5 being guided along the closed scan path 14, 14'. Further, the determination element 12, in particular the determination area provided by the determination element 12, is oriented radially with respect to a center 15 of the closed scan path 14. Therefore, the determination unit is insensitive to inaccurate positioning of the closed scan path 14, 14' with respect to the determination element 12.

It is also possible to "search" the determination element 12, for example, if the closed scan path 14, 14' does not from the start lie on the determination area that is provided by the determination element 12. In this case, the center 15 of the closed scan path 14 can be shifted over the determination unit 10 as long as an electrical signal is generated via the determination element 12 which is received by the control unit 13. Preferably, the position of the center 15 can be changed after each turn the energy beam 5 has been guided along the closed scan path 14, 14' and no signal has been received. The shifting of the center 15 can be continued until a signal is received. In other words, it is not necessary to accurately position the determination unit 10 inside the process chamber 7, but it is possible to only arrange the determination unit 10 inside the process chamber 7, for example in the center of the build plate 2 and "search" the determination element 12 with the energy beam 5, as described before.

Self-evidently, the inventive method may be performed on the inventive apparatus 1, preferably using an inventive determination device 9.

## Claims

1. Determination device (9) for determining a scan velocity of an energy beam (5) for an apparatus (1) for additively manufacturing three-dimensional objects by means of successive layerwise selective irradiation and consolidation of layers of a build material which can be consolidated by means of an energy beam (5), wherein the determination device (9) comprises a determination unit (10) that is arrangeable or arranged in a process chamber (7) of an apparatus (1) for additively manufacturing three-dimensional objects, **characterized in that** the determination device (9) is adapted to determine a scan velocity with which the energy beam (5) is guided along a closed scan path (14, 14') based on the scan time required for guiding the energy beam (5) along the closed scan path (14, 14').

2. Determination device according to claim 1, **characterized by** a determination element (12) that is arranged on the determination unit (10) and adapted to receive the energy beam (5) that is guided inside the process chamber (7).

3. Determination device according to claim 1 or 2, **characterized in that** the determination device (9) is adapted to determine the scan velocity based on a number of turns the energy beam (5) is guided along the closed scan path (14, 14') and the corresponding scan time.

4. Determination device according to claim 3, **characterized in that** the determination device (9) is adapted to count the number of turns based on at least one signal generated by the determination element (12) upon the energy beam (5) passing the determination element (12).

5. Determination device according to claim 3 or 4, **characterized in that** the determination device (9) is adapted to determine the scan time for each turn based on the generation of the signal.

6. Determination device according to one of the claims 2 to 5, **characterized in that** the determination element (12) is built as or comprises at least one sensor that is adapted to generate an electrical signal upon irradiation with the energy beam (5), in particular an optical sensor, preferably a photo diode.

7. Determination device according to one of the claims 2 to 6, **characterized in that** the determination element (12) comprises a determination area that is larger than the track size generated via the energy beam (5) that is guided along the closed scan path (14, 14').

8. Determination device according to claim 6 or 7, **characterized in that** the determination device (9) is insensitive to incorrect positioning of the determination element (12) due to the defined size and/or the defined orientation of the determination area.

9. Determination device according to one of the preceding claims, **characterized in that** the closed scan path (14, 14') comprises at least one path segment with a defined shape, in particular a circular shape and/or an elliptical shape and/or a rectangular shape.

10. Determination device according to one of the preceding claims, **characterized in that** the determination device (9) is adapted to determine the scan velocity of the energy beam (5) being guided along at least two different closed scan paths (14, 14'), in particular differing in diameter.

11. Determination device according to one of the preceding claims, **characterized in that** the determination unit (10) is built as plate-like module arrangeable or arranged in the process chamber (7), wherein the determination device (9) comprises a holding means (11), in particular an opening or a recess in the surface of the plate-like module, in which the determination element (12) is arranged.

12. Determination device according to one of the preceding claims, **characterized in that** the determination unit (10) comprises positioning means, wherein the determination unit (10) is adapted to be connected with corresponding positioning means arranged inside a process chamber (7).

13. Apparatus (1) for additively manufacturing three-dimensional objects by means of successive layerwise selective irradiation and consolidation of layers of a build material which can be consolidated by means of an energy beam (5), **characterized in that** the apparatus (1) comprises a determination device (9) according to one of the preceding claims.

14. Method for determining a scan velocity of an energy beam (5) in an apparatus (1) for additively manufacturing three-dimensional objects by means of successive layerwise selective irradiation and consolidation of layers of a build material which can be consolidated by means of the energy beam (5), **characterized in that** the energy beam (5) is guided in a closed scan path (14, 14') over the determination device (9), wherein the scan velocity with which the energy beam (5) is guided along the closed scan path (14, 14') inside the process chamber (7) is determined based on the scan time required for guiding the energy beam (5) along the closed scan path (14, 14').

15. Method according to claim 14, **characterized by** generating a relative movement between the determination device (9) and the closed scan path (14, 14') until the energy beam (5) that is guided along the closed scan path (14, 14') is incident on the determination unit (10).

## Patentansprüche

1. Bestimmungsvorrichtung (9) zum Bestimmen einer Scangeschwindigkeit eines Energiestrahls (5) für eine Vorrichtung (1) zur additiven Fertigung dreidimensionaler Objekte mittels aufeinanderfolgender, schichtweiser selektiver Bestrahlung und Verfestigung von Schichten eines Aufbaumaterials, das mittels eines Energiestrahls (5) verfestigt werden kann, wobei die Bestimmungsvorrichtung (9) eine Bestimmungseinheit (10) aufweist, die in einer Prozesskammer (7) einer Vorrichtung (1) zur additiven Fertigung dreidimensionaler Objekte angeordnet ist oder angeordnet werden kann, **dadurch gekennzeichnet, dass** die Bestimmungsvorrichtung (9) eingerichtet ist, eine Scangeschwindigkeit, mit der der Energiestrahl (5) entlang eines geschlossenen Scanwegs (14, 14') geführt wird, basierend auf der Scanzeit, die benötigt wird, um den Energiestrahl (5) entlang des geschlossenen Scanwegs (14, 14') zu führen, zu bestimmen.

2. Bestimmungsvorrichtung nach Anspruch 1, **gekennzeichnet durch** ein Bestimmungselement (12), das an der Bestimmungseinheit (10) angeordnet und eingerichtet ist, den Energiestrahl (5) zu empfangen, der innerhalb der Prozesskammer (7) geführt wird.

3. Bestimmungsvorrichtung nach Anspruch 1 oder 2, **dadurch gekennzeichnet, dass** die Bestimmungsvorrichtung (9) eingerichtet ist, die Scangeschwindigkeit basierend auf einer Anzahl von Kurven, entlang denen der Energiestrahl (5) auf dem geschlossenen Scanweg (14, 14') geführt wird, und der entsprechenden Scanzeit zu bestimmen.

4. Bestimmungsvorrichtung nach Anspruch 3, **dadurch gekennzeichnet, dass** die Bestimmungsvorrichtung (9) eingerichtet ist, die Anzahl von Kurven basierend auf zumindest einem Signal zu zählen, das von dem Bestimmungselement (12) erzeugt wird, wenn der Energiestrahl (5) das Bestimmungselement (12) passiert.

5. Bestimmungsvorrichtung nach Anspruch 3 oder 4, **dadurch gekennzeichnet, dass** die Bestimmungsvorrichtung (9) eingerichtet ist, die Scanzeit für jede Kurve basierend auf der Erzeugung des Signals zu bestimmen.

6. Bestimmungsvorrichtung nach einem der Ansprüche 2 bis 5, **dadurch gekennzeichnet, dass** das Bestimmungselement (12) als Sensor aufgebaut ist oder zumindest einen solchen aufweist, der eingerichtet ist, bei Bestrahlung mit dem Energiestrahl (5) ein elektrisches Signal zu erzeugen, insbesondere ein optischer Sensor, bevorzugt eine Photodiode.

7. Bestimmungsvorrichtung nach einem der Ansprüche 2 bis 6, **dadurch gekennzeichnet, dass** das Bestimmungselement (12) einen Bestimmungsbereich aufweist, der größer ist als die Streckengröße, die über den Energiestrahl (5) erzeugt wird, der entlang des geschlossenen Wegs (14, 14') geführt wird.

8. Bestimmungsvorrichtung nach Anspruch 6 oder 7, **dadurch gekennzeichnet, dass** die Bestimmungsvorrichtung (9) unempfindlich gegenüber inkorrekter Positionierung des Bestimmungselements (12) aufgrund der definierten Größe und/oder der definierten Ausrichtung des Bestimmungsbereichs ist.

9. Bestimmungsvorrichtung nach einem der vorstehenden Ansprüche, **dadurch gekennzeichnet, dass** der geschlossene Scanweg (14, 14') mindestens ein Wegsegment mit einer definierten Form aufweist, insbesondere eine Kreisform und/oder eine Ellipsenform und/oder eine Rechteckform.

10. Bestimmungsvorrichtung nach einem der vorstehenden Ansprüche, **dadurch gekennzeichnet, dass** die Bestimmungsvorrichtung (9) eingerichtet ist, die Scangeschwindigkeit des Energiestrahls (5) zu bestimmen, der entlang von mindestens zwei geschlossenen Scanwegen (14, 14') geführt wird, die sich insbesondere hinsichtlich ihres Durchmessers unterscheiden.

11. Bestimmungsvorrichtung nach einem der vorstehenden Ansprüche, **dadurch gekennzeichnet, dass** die Bestimmungseinheit (10) als plattenartiges Modul aufgebaut ist, das in der Prozesskammer (7) angeordnet ist oder angeordnet werden kann, wobei die Bestimmungsvorrichtung (9) eine Halteeinrichtung (11) insbesondere eine Öffnung oder Aussparung in der Oberfläche des plattenartigen Moduls, in dem das Bestimmungselement (12) angeordnet ist, aufweist.

12. Bestimmungsvorrichtung nach einem der vorstehenden Ansprüche, **dadurch gekennzeichnet, dass** die Bestimmungseinheit (10) Positioniereinrichtungen aufweist, wobei die Bestimmungseinheit (10) eingerichtet ist, mit entsprechenden Positioniereinrichtungen verbunden zu werden, die im Inneren einer Prozesskammer (7) angeordnet sind.

13. Vorrichtung (1) zur additiven Herstellung zur additiven Fertigung dreidimensionaler Objekte mittels aufeinanderfolgender, schichtweiser selektiver Bestrahlung und Verfestigung von Schichten eines Aufbaumaterials, das mittels eines Energiestrahls (5) verfestigt werden kann, **dadurch gekennzeichnet, dass** die Vorrichtung (1) eine Bestimmungsvorrichtung (9) nach einem der vorstehenden Ansprüche aufweist.

14. Verfahren zum Bestimmen einer Scangeschwindigkeit eines Energiestrahls (5) in einer Vorrichtung (1) zur additiven Fertigung dreidimensionaler Objekte mittels aufeinanderfolgender, schichtweiser selektiver Bestrahlung und Verfestigung von Schichten eines Aufbaumaterials, das mittels des Energiestrahls (5) verfestigt werden kann, **dadurch gekennzeichnet, dass** der Energiestrahl (5) in einem geschlossenen Scanweg (14, 14') über die Bestimmungsvorrichtung (9) geführt wird, wobei die Scangeschwindigkeit, mit der der Energiestrahl (5) entlang des geschlossenen Scanwegs (14, 14') innerhalb der Prozesskammer (7) geführt wird, basierend auf der Scanzeit bestimmt wird, die benötigt wird, um den Energiestrahl (5) entlang des geschlossenen Scanwegs (14, 14') zu führen.

15. Verfahren nach Anspruch 14, **gekennzeichnet durch** das Erzeugen einer Relativbewegung zwischen der Bestimmungsvorrichtung (9) und dem geschlossenen Scanweg (14, 14'), bis der Energiestrahl (5), der entlang des geschlossenen Scanwegs (14, 14') geführt wird, auf der Bestimmungseinheit (10) auftrifft.

## Revendications

1. Dispositif de détermination (9) permettant de déterminer une vitesse de balayage d'un faisceau d'énergie (5) pour un appareil (1) destiné à la fabrication additive d'objets tridimensionnels au moyen de l'irradiation et de la consolidation sélectives, en forme de couches successives, de couches d'un matériau de construction pouvant être consolidées au moyen d'un faisceau d'énergie (5), le dispositif de détermination (9) comprenant une unité de détermination (10) pouvant être disposée, ou étant disposée, dans une chambre de traitement (7) d'un appareil (1) destiné à la fabrication additive d'objets tridimensionnels, **caractérisé en ce que** le dispositif de détermination (9) est adapté à déterminer une vitesse de balayage, avec laquelle le faisceau d'énergie (5) est guidé le long d'un chemin de balayage fermé (14, 14'), en fonction du temps de balayage requis pour guider le faisceau d'énergie (5) le long du chemin de balayage fermé (14, 14').

2. Le dispositif de détermination selon la revendication 1, **caractérisé par** un élément de détermination (12) disposé sur l'unité de détermination (10) et adapté à recevoir le faisceau d'énergie (5) guidé à l'intérieur de la chambre de traitement (7).

3. Le dispositif de détermination selon les revendications 1 ou 2, **caractérisé en ce que** le dispositif de détermination (9) est adapté à déterminer la vitesse de balayage en fonction d'un nombre de tours de guidage du faisceau d'énergie (5) le long du chemin de balayage fermé (14, 14'), et du temps de balayage correspondant.

4. Le dispositif de détermination selon la revendication 3, **caractérisé en ce que** le dispositif de détermination (9) est adapté à compter le nombre de tours en fonction d'au moins un signal produit par l'élément de détermination (12) lors du traversant le faisceau d'énergie (5) par l'élément de détermination (12).

5. Le dispositif de détermination selon les revendications 3 ou 4, **caractérisé en ce que** le dispositif de détermination (9) est adapté à déterminer le temps de balayage pour chaque tour en fonction de la production du signal.

6. Le dispositif de détermination selon l'une des revendications 2 à 5, **caractérisé en ce que** l'élément de détermination (12) est construit sous forme de capteur, ou comprend au moins un capteur, adapté à produire un signal électrique lors de l'irradiation avec le faisceau d'énergie (5), en particulier un capteur optique, de préférence une photodiode.

7. Le dispositif de détermination selon l'une des revendications 2 à 6, **caractérisé en ce que** l'élément de détermination (12) comprend une zone de détermination plus grande que la dimension de la trace produite par l'intermédiaire du faisceau d'énergie (5) guidé le long du chemin de balayage fermé (14, 14').

8. Le dispositif de détermination selon les revendications 6 ou 7, **caractérisé en ce que** le dispositif de détermination (9) est insensible à un positionnement incorrect de l'élément de détermination (12) en raison de la dimension définie et/ou de l'orientation définie de la zone de détermination.

9. Le dispositif de détermination selon l'une des revendications précédentes, **caractérisé en ce que** le chemin de balayage fermé (14, 14') comprend au moins un segment de chemin présentant une forme définie, en particulier une forme circulaire et/ou une forme elliptique et/ou une forme rectangulaire.

10. Le dispositif de détermination selon l'une des revendications précédentes, **caractérisé en ce que** le dispositif de détermination (9) est adapté à déterminer la vitesse de balayage du faisceau d'énergie (5) guidé le long d'au moins deux chemins de balayage fermés (14, 14') différents, en particulier de diamètres différents.

11. Le dispositif de détermination selon l'une des revendications précédentes, **caractérisé en ce que** l'unité de détermination (10) est construite sous forme de module du type plaque pouvant être disposé, ou étant disposé, dans la chambre de traitement (7), le dispositif de détermination (9) comprenant un moyen de retenue (11), en particulier une ouverture ou un évidement dans la surface du module du type plaque, dans lequel l'élément de détermination (12) est disposé.

12. Le dispositif de détermination selon l'une des revendications précédentes, **caractérisé en ce que** l'unité de détermination (10) comprend des moyens de positionnement, l'unité de détermination (10) étant adaptée à être reliée aux moyens de positionnement correspondants disposés à l'intérieur d'une chambre de traitement (7).

13. Appareil (1) destiné à la fabrication additive d'objets tridimensionnels au moyen de l'irradiation et de la consolidation sélectives, en forme de couches successives, de couches d'un matériau de construction pouvant être consolidées au moyen d'un faisceau d'énergie (5), **caractérisé en ce que** l'appareil (1) comprend un dispositif de détermination (9) selon l'une des revendications précédentes.

14. Procédé de détermination d'une vitesse de balayage d'un faisceau d'énergie (5) dans un appareil (1) destiné à la fabrication additive d'objets tridimensionnels au moyen de l'irradiation et de la consolidation sélectives, en forme de couches successives, de couches d'un matériau de construction pouvant être consolidées au moyen d'un faisceau d'énergie (5), **caractérisé en ce que** le faisceau d'énergie (5) est guidé dans un chemin de balayage fermé (14, 14') sur le dispositif de détermination (9), la vitesse de balayage avec laquelle le faisceau d'énergie (5) est guidé le long du chemin de balayage fermé (14, 14'), à l'intérieur de la chambre de traitement (7), étant déterminée en fonction du temps de balayage requis pour guider le faisceau d'énergie (5) le long du chemin de balayage fermé (14, 14').

15. Le procédé selon la revendication 14, **caractérisé par** la production d'un déplacement relatif entre le dispositif de détermination (9) et le chemin de balayage fermé (14, 14'), jusqu'à incidence du faisceau d'énergie (5), guidé le long du chemin de balayage fermé (14, 14'), sur l'unité de détermination (10).
